# EUROPEAN PATENT APPLICATION

(11) **EP 4 711 840 A1**
(43) Date of publication of application: **18.03.2026**
(21) Application number: 24200905.8
(22) Date of filing: 17.09.2024
(51) Int. Cl.: G02F 1/01, G02B 6/12, G02F 1/025, G02B 6/122

(54) **COUPLER FOR A TRIPLEX WAVEGUIDE**

(30) Priority: 16.09.2024 GB 202413587
(71) Applicant: QuiX Quantum BV, 7521 AN Enschede (NL)
(72) Inventor: HENGESBACH, Stefan, 7521 AN Enschede (NL); DEMILLE, Trevor, 7521 AN Enschede (NL)
(74) Representative: CMS Cameron McKenna Nabarro Olswang LLP

(57) **Abstract**

A coupler for coupling single photons or squeezed light into a first silicon nitride waveguide of an optical circuit is described. The coupler comprises a silicon dioxide substrate; the first silicon nitride waveguide formed in the silicon dioxide substrate, wherein the first silicon nitride waveguide is formed in a distal end of the silicon dioxide substate, and a second silicon nitride waveguide formed in the silicon dioxide substate, wherein:
the second silicon nitride waveguide is formed in a proximal end of the silicon dioxide substrate wherein a distal portion of the second silicon nitride waveguide is adjacent to a proximal portion of the first silicon nitride waveguide to cause light to couple from the second silicon nitride waveguide into the first silicon nitride waveguide.

## Description

### Background

TriPlex waveguides are a form of silicon nitride waveguides known for their low loss. This makes TriPlex waveguides ideally suited for quantum computing and optical communication applications. However, due to low *χ*⁽³⁾ optical nonlinearities it is difficult to perform single photon or squeezed light generation in such TriPlex waveguides. Hence, use of the waveguides for quantum computing and optical communications can be challenging in practice due to the difficulty in providing input to the waveguides. It would thus be desirable to provide a technique for inputting single photons and/or squeezed light into such TriPlex waveguides.

The embodiments described below are not limited to implementations which solve any or all of the disadvantages of known TriPlex waveguide systems.

### Summary

This Summary is provided to introduce a selection of concepts in a simplified form that are further described below in the Detailed Description. This Summary is not intended to identify key features or essential features of the claimed subject matter, nor is it intended to be used as an aid in

In an embodiment, a coupler for coupling single photons or squeezed light into a first silicon nitride waveguide of an optical circuit is defined. The coupler comprises a silicon dioxide substrate; the first silicon nitride waveguide formed in the silicon dioxide substrate, wherein the first silicon nitride waveguide is formed in a distal end of the silicon dioxide substate, and a second silicon nitride waveguide formed in the silicon dioxide substate. The second silicon nitride waveguide is formed in a proximal end of the silicon dioxide substrate. A distal portion of the second silicon nitride waveguide is adjacent to a proximal portion of the first silicon nitride waveguide to cause light to couple from the second silicon nitride waveguide into the first silicon nitride waveguide; and the second silicon nitride waveguide has a thickness greater than a thickness of the first silicon nitride waveguide. The coupler further comprises a light input port configured to couple light from a laser light source into a proximal end of the second silicon nitride waveguide. In quantum computing or other optical applications it can be desirable to use a low loss silicon nitride waveguide such as a TriPlex waveguide. However, these waveguides do not exhibit a strong *χ*⁽³⁾ Kerr effect meaning single photon and squeezed light generation in such waveguides is challenging. The coupler overcome this difficulty by having a relatively thick silicon nitride second waveguide that can act as a platform for a stronger *χ*⁽³⁾ Kerr effect. The single photons or squeezed light can be generated in this second waveguide then coupled to the first waveguide. This enables the use of single photons in TriPlex or other low-loss but low *χ*⁽³⁾ Kerr effect waveguides.

In some examples the second silicon nitride waveguide has a width greater than a width of the first silicon nitride waveguide. This can aid in having the second silicon nitride waveguide be a platform for a stronger *χ*⁽³⁾ Kerr effect.

In some examples, the second silicon nitride waveguide is formed lower in the silicon dioxide substrate than the first silicon nitride waveguide; and the distal portion of the second silicon nitride waveguide adjacent to the proximal portion of the first silicon nitride waveguide is beneath the proximal portion of the first silicon nitride waveguide. This arrangement can enable a greater overlap between the first and second waveguides to increase the coupling of light between the waveguides. Having the first silicon nitride waveguide above the second silicon nitride waveguide means the first silicon nitride waveguide is nearer a surface of the silicon dioxide substrate. In downstream applications, components such as electro-optically active materials can be placed on the surface of the silicon dioxide substrate to provide modulation to light in the first silicon nitride waveguide. Having the first silicon nitride waveguide be positioned above the second silicon nitride waveguide ensures components on the surface of the silicon dioxide substrate are within sufficient distance of the first silicon nitride waveguide to induce effects in the first silicon nitride waveguide. Alternatively, in some downstream applications electro-optically active materials may be formed before the first silicon nitride waveguide and may be positioned below the first silicon nitride waveguide.

In the above examples, the coupler may further comprise a trench in the silicon dioxide substrate wherein the trench is above a proximal portion of second silicon nitride waveguide, wherein the proximal portion of the second silicon nitride waveguide is not adjacent to the first silicon nitride waveguide; and an electro-optically active material in the trench. It may be desirable to modulate light in the second silicon nitride waveguide. As the second silicon nitride waveguide is beneath the first silicon nitride waveguide, an electro-optically active material on the surface of the silicon dioxide substrate may be too far from the second silicon nitride waveguide to induce a suitable effect in the second silicon nitride waveguide. Positioning the electro-optically active material in a trench can solve this by positioning the electro-optically active material closer to the second silicon nitride waveguide.

When the distal portion of the second silicon nitride waveguide is beneath the proximal portion of the first silicon nitride waveguide, then, in some examples, one or more ring resonators may be formed in the silicon dioxide substrate adjacent to the proximal portion of the second silicon nitride waveguide. The coupler then may further comprise a trench in the silicon dioxide substrate, wherein the trench is above the one or more ring resonators; and one or more heating elements in the trench, wherein each heating element modulates an interferometer within one of the one or more ring resonators. The one or more ring resonators can be used for single photon generation and/or filtering a pair of single photons from laser light. The heating element can be used to control or tune the one or more ring resonators. In this regard, the heater can be used to change the refractive index of the ring resonator wherein changing the refractive index of the ring resonator shifts/changes the frequency at which the ring resonator resonates. This enables the heater to control or tune the frequency of light/photons/squeezed light coupled into and output of the ring resonator. However, the relatively low positioning of the ring resonator in the silicon dioxide substrate means a heating element on the surface of the silicon dioxide substrate may be too distant from the ring resonator to exert adequate control. Placing the heating element in a trench enables the heating element to be placed closer to the ring resonator and allows the heating element to be used to control the ring resonator.

In some examples of the above example, the one or more ring resonators comprise a first ring resonator and a second ring resonator; the one or more heating elements comprise a first heating element and a second heating element; the first heating element is positioned in the trench above the first ring resonator; and the second heating element is positioned in the trench above the second ring resonator. In some examples a separate trench may be present above each ring resonator. In other examples both the first and second heating elements may be placed in the same trench. The use of multiple ring resonators provides an enhanced filtering structure to enable pairs of single photons to be separated from laser light.

In some examples, the first silicon nitride waveguide and the second silicon nitride waveguide are formed at a same depth in the silicon dioxide substrate; the distal portion of the second silicon nitride waveguide comprises a distal edge of the second silicon nitride waveguide; and the proximal portion of the first silicon nitride waveguide comprises a proximal edge of the first silicon nitride waveguide. Having the two silicon nitride waveguides be at the same depth allows components such as heating elements or electro-optically active elements to be placed on the surface of the silicon dioxide substrate to interact with either waveguide without the need for trenches thus simplifying formation of the coupler. Alternatively, this allows e.g. heating elements to be positioned on the surface of the silicon dioxide substrate to interact with the first silicon nitride waveguide and electro-optically active elements to be deposited before the first silicon nitride waveguide and hence be below the first silicon nitride waveguide.

In some examples of the above example, the coupler further comprises an electro-optically active material formed on a surface of the silicon dioxide substrate above a proximal portion of the second silicon nitride waveguide, wherein the proximal portion of the second silicon nitride waveguide is not adjacent to the first silicon nitride waveguide. This enables modulation of light in the second silicon nitride waveguide.

In some examples where the first silicon nitride waveguide and the second silicon nitride waveguide are formed at a same depth, the coupler may further comprise one or more ring resonators formed in the silicon dioxide substrate adjacent to a proximal portion of the second silicon nitride waveguide, wherein the proximal portion of the second silicon nitride waveguide is not adjacent to the first silicon nitride waveguide; and one or more heating element formed on a surface of the silicon dioxide substrate above the ring resonator, wherein each heating element modulates an interferometer within a corresponding respective ring resonator. The use of ring resonators enables the generation and/or filtering of single photon pairs. The heating elements can be used to control the ring resonators.

In some examples, the coupler further comprises a filtering ring formed in the silicon dioxide substrate adjacent to the proximal portion of the second silicon waveguide. The filter ring can be used to filter the pair of single photons generated by a ring resonator from the laser light input so one of the pair of single photons can be used for downstream applications.

In examples where a heating element is used then the heating element may comprise tungsten electrical contacts. Tungsten has a relatively high melting point. The formation of the coupler can involve an annealing process after the heating element has been formed, for example when the heating element is positioned in a trench. Using tungsten as the electrical contacts of the heating element prevents the electrical contracts melting during the annealing process while still using an inert material for the electrical contacts.

In some examples a thickness of the distal portion of the second silicon nitride waveguide adjacent to the first silicon nitride waveguide tapers from a maximum thickness to a minimum thickness from a proximal end of the distal portion to a distal end of the distal portion; and/or a thickness of the proximal portion of the first silicon nitride waveguide adjacent to the second silicon nitride waveguide tapers from a minimum thickness to a maximum thickness from a proximal end of the proximal portion to a distal end of the distal portion. This increases the effectiveness of the coupling between the second silicon nitride waveguide and the first silicon nitride waveguide.

In some examples of the above example, an angle of the taper of the distal portion of the second silicon nitride waveguide is between 0.1° and 1°; and/or an angle of the taper of the proximal portion of the first silicon nitride waveguide is between 0.1° and 1°.

In some examples the second waveguide has a rectangular cross-section or the second waveguide has a trapezoid cross-section formed of canted lateral facets. Rectangular and trapezoid cross-sections provide easier fabrication while still enabling confinement of the optical mode.

In some examples, the coupler further comprises an electro-optically active material formed on a surface of the silicon dioxide substrate above a distal portion of the first waveguide, wherein the distal portion of the first waveguide is not adjacent to the second waveguide. This enables the first waveguide to be used for further downstream applications.

In some examples the first silicon nitride waveguide comprises a TriPlex waveguide. A TriPlex waveguide has relatively low loss making it a useful waveguide for optical quantum computing and optical switching as well as other downstream applications.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 shows a side cross-section of a first example of a coupler for coupling photons or squeezed light into a first waveguide;
Figure 2 shows a side cross-section of a second example of a coupler for coupling photons or squeezed light into a first waveguide
Figure 3A shows a front cross-section of a coupler according to the first or second example and also including a ring resonator;
Figure 3B shows a side-cross section of a second example of a coupler also including a ring resonator;
Figures 4A, and 4B show top cross-sections of the first or second example coupler including different arrangements of multiple ring resonators;
Figure 5 shows a side cross-section showing a coupler according to the first example and also including an electro-optically active material;
Figure 6A shows an example arrangement of double-stripe TriPlex;
Figure 6B shows an example box shell arrangement of TriPlex;
Figure 6C shows an example single-stripe arrangement of TriPlex;
Figure 6D shows an example filled box arrangement of TriPlex; and
Figure 7 shows a top cross-section of an example arrangement of multiple couplers.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

The class of waveguides known as TriPlex waveguides are known to have relatively low loss making them particularly suitable to quantum computing applications. In addition, phase actuators can be implemented in these waveguides by providing a strip of electro-optically active material, such as Barium Titanate (BaTiO₃) and Rubidium Titanyl Phosphate (RbTiOPO₄/RTP), in, on or below the Triplex waveguides. However, implementing *χ*⁽³⁾ optical nonlinearities via the Kerr Effect in TriPlex waveguides is inefficient meaning that it becomes impractical to perform single photon or squeezed light generation within a TriPlex waveguide. Thus, if TriPlex waveguides are going to be used for downstream single photon or squeezed light applications such as quantum computing, an apparatus for coupling the single photons into the TriPlex waveguides becomes necessary.

The present application relates to a coupler for coupling single photons into a first silicon nitride waveguide such as a TriPlex waveguide. The coupler can also be referred to as a single photon source, a single photon generation unit, and a non-linearity module. The coupler comprises a silicon dioxide substate or cladding and a first and second silicon nitride waveguide. A distal end of the first silicon nitride waveguide connects the coupler either directly or via subsequent connections to the downstream use of the single photons such as a quantum computer. In some examples, as explained later, the first silicon nitride waveguide is a TriPlex waveguide. The second silicon nitride waveguide is one which can serve as a suitable platform for *χ*⁽³⁾ optical Kerr non-linearity generation. This second silicon nitride waveguide has a depth and greater than the first silicon nitride waveguide. In some examples, the second silicon nitride waveguide also has a width greater than a width of the first silicon nitride waveguide. An input to a proximal end of the silicon nitride waveguide comprises laser light. While the first silicon nitride waveguide and the second silicon nitride waveguide are separated by the silicon dioxide substrate or cladding, a distal portion of the second silicon nitride waveguide and a proximal portion of the first silicon nitride waveguide are adjacent to each other. In other words the distal portion of the second silicon nitride waveguide and the proximal portion of the first silicon nitride waveguide run alongside each other, run adjacent to each other, or are parallel to each other etc. This allows light and hence single photons or squeezed light to couple from the second silicon nitride waveguide into the first silicon nitride waveguide.

The terms "proximal" and "distal" are being used to described portions of the waveguides. In this context, the proximal portion of the waveguide is a portion or end of the waveguide nearest where light is coupled into the waveguide and the distal potion of a waveguide is a portion or end of the waveguide where light is coupled out of the waveguide based on a direction of propagation of light from a light source. The proximal portion can also be known as a first portion and the distal portion as a second portion. In addition or as an alternative the proximal portion can be referred to as a light receiving end of a waveguide and the distal portion as a light processing end of a waveguide. In addition or an alternative, the proximal portion can be referred to as a start or initial chip edge of the waveguide and the distal portion as a termination or end chip edge of the waveguide.

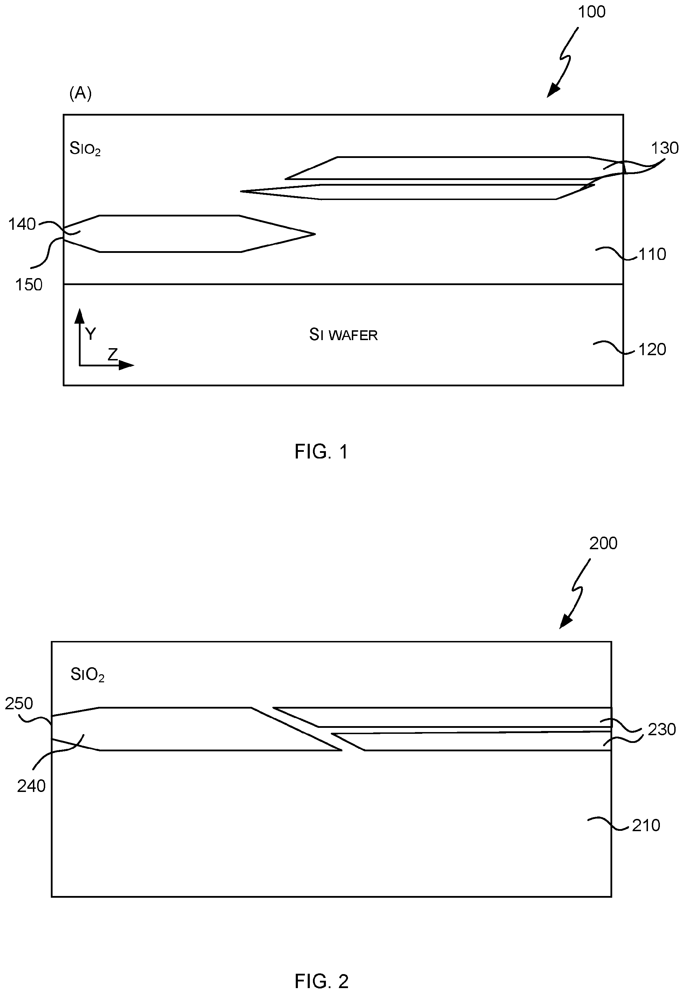

Figure 1 shows an example coupler 100, single photon source or non-linearity module as described in this application. The coupler 100 comprises a silicon dioxide substrate 110 which can otherwise be known as a silicon dioxide cladding. In some examples, such as that shown in Figure 1, the silicon dioxide substate 110 is formed on a silicon wafer 120. However, in other examples, a different base or wafer such as Silicon on Insulator (SOI), glass, or Alumina (Al₂O₃) can be used. As shown in Figure 1 two waveguides 130, 140 are formed in the silicon dioxide substrate 110. The first waveguide 130 is a low-loss waveguide that comprises at lest a first strip of silicon nitride. As explained in more detail later, the first waveguide 130 may be a TriPlex waveguide. In the example shown in Figure 1, the first waveguide 130 is a double-stripe TriPlex waveguide comprising two strips of silicon nitride separated by the silicon dioxide substrate or cladding 110. However, any other suitable silicon nitride waveguide including any suitable form of TriPlex waveguide can be used. The first waveguide 130, otherwise known as the first silicon nitride waveguide 130 can be a waveguide that is used for downstream applications of photons, or where applicable, squeezed light. For example, the first waveguide 130 can form part of a quantum computer. In addition, or as an alternative, the first waveguide 130 may transport the photons or squeezed light. In addition, or as an alternative, the first waveguide 130 may couple the photons or squeezed light into a downstream application. As mentioned above, the first waveguide 130 is a relatively low loss waveguide, such as a TriPlex waveguide. Hence, the first waveguide 130 is useful for downstream applications or transport.

The coupler 100 also comprises a second waveguide 140. The second waveguide 140 also comprises a silicon nitride waveguide. The second waveguide 140 can be referred to as a thick silicon nitride waveguide. In this regard, the second waveguide 140 has a depth greater than a depth of the first waveguide 130. It is noted that while in some examples the second waveguide 140 may also be formed lower or deeper in the silicon dioxide substate 110 than the first waveguide 130, the second waveguide 140 having a depth greater than a depth of the first waveguide 130 means the dimension of depth of the second waveguide 140 is greater than the dimension of depth of the first waveguide 130 e.g. the second waveguide 140 is larger in the dimension of the depth than the first waveguide 130. This enables a cross-Kerr *χ*⁽³⁾ effect to be formed in the first waveguide 130 which enables the first waveguide to be used for single photon generation and/or to drive squeezing. In some examples, the second waveguide has a width greater than a width of the first waveguide 130. In some examples, the width of the second waveguide 140 can be approximately 800nm, for example it can be between 700nm and 900nm. In addition, the depth or thickness of the second waveguide 140 can be between 2.5µm and 3µm. These dimensions enables the second waveguide 140 to be used as a suitable platform for generation of *χ*⁽³⁾ optical nonlinearity via the Kerr Effect while keeping the size of the second waveguide 140 suitably small to prevent large losses and/or to prevent the second waveguide 140 taking up a large portion of the silicon dioxide substrate 110. In some examples, the second waveguide 140 can have a rectangular cross-section to simplify formation. However, in other examples the second waveguide 140 can have canted lateral facets making a trapezoid cross-section. Rectangular and trapezoid cross-sections provide easier fabrication while still enabling confinement of the optical mode. In yet further examples, the second waveguide 140 can have a cylindrical cross-section.

The coupler 100 further comprises a light input port 150 configured to couple light from a laser light source (not shown) into a proximal end of the second waveguide 140. The light source which can be part of the coupler 100 or separate from the coupler 100, and can be an on-chip light source formed on the silicon dioxide substrate 110 or an-off chip light source not formed on the silicon dioxide substrate.

In order to couple photons or squeezed light generated by the cross-Kerr non-linearity of the second waveguide 140 into the first waveguide 130, a distal portion of the second waveguide 140 and a proximal portion of the first waveguide 130 are adjacent to each other in the silicon dioxide substrate 110. In other words, the distal portion of the second waveguide 140 and the proximal portion of the first waveguide 130 run alongside each other, or are otherwise next to or beside each other. This enables light which can include single photons or squeezed light that result from the *χ*⁽³⁾ Kerr non-linearity of the second waveguide 140 to be coupled into the first waveguide 130. Once coupled into the first waveguide 130, the single photons or squeezed light may be used for the downstream applications associated with the first waveguide 130.

The above therefore provides a coupler 100 for coupling single photons or squeezed light which can be formed using the *χ*⁽³⁾ Kerr non-linearity of the second waveguide 140 into a first waveguide 130 wherein the first waveguide 130 comprises a low-loss waveguide with does not exhibit a strong Kerr effect, such as a Triplex waveguide. This enables the use of such low-loss waveguides in downstream applications while still ensuring they can be provided with single photons and or squeezed light to ensure a variety of downstream uses.

As discussed above, both the first waveguide 130 and the second waveguide 140 are silicon nitride waveguides. Silicon nitride waveguides can be advantageous since they have a low optical loss, low thermo-optical coefficients (so are thermally stable in their refractive indices), have minimal non-linear absorption loss and are scalable due to being CMOS (complementary metal-oxide semiconductor) compatible.

As mentioned above, a proximal portion of the first waveguide 130 and a distal portion of the second waveguide 140 run alongside or otherwise are adjacent to each other. In the example shown in Figure 1 this is achieved by having the second waveguide 140 be formed in the silicon dioxide substrate or cladding 110 lower than first waveguide 130. In other words, the second waveguide 140 can be positioned deeper within or further from the top of the silicon dioxide substrate 110 than the first waveguide 130. As such, the distal portion of the second waveguide 140 is below the proximal portion of the first waveguide 130. This arrangement enables the distal portion of the second waveguide 140 to be adjacent to the first waveguide 130 in a way that enables sufficient overlap between the two waveguides to provide a directional coupler. This arrangement is advantageous since forming one waveguide lower in the silicon dioxide substate 110 than the other waveguide enables easier formation and ensures an effective directional coupler can be formed by enabling a large overlap.

As explained in more detail below, the first waveguide 130 and second waveguide 140 can be supplemented by additional components that are formed on a surface of the silicon dioxide substrate 110 proximate the waveguide they serve. The surface may be a top surface. When one waveguide is deeper, the top surface may be too far from the deeper waveguide to enable the components to be positioned proximate the deeper waveguide. Thus, a trench may be formed in the silicon dioxide substrate 110. As forming the trench requires additional processing, it is desirable to minimize the number of trenches formed. Given the first waveguide 130 is used for downstream applications, this waveguide often requires more additional components positioned proximate than the second waveguide 140. Thus, having the second waveguide 140 be deeper enables a reduction in the number of trenches and thus reduces manufacturing challenges and requirements.

That said, in an another example, the first waveguide 130 can be formed in the silicon dioxide substrate 110 lower than he second waveguide 140. In this example, the proximal portion of the first waveguide 130 is below the distal portion of the second waveguide 140. Once again, this example enables an easy formation of a directional coupler. This example may be advantageous when the first waveguide 130 requires fewer additional components than the second waveguide 140 e.g. when the first waveguide 130 is used to couple to downstream applications rather than to directly implement the downstream applications or where the downstream applications are relatively simple etc.

As mentioned above, the distal portion of the second waveguide 140 and the proximal portion of the first waveguide 130 are adjacent or otherwise run alongside each other. In some examples, the distal portion of the of the second waveguide 140 and the proximal portion of the first waveguide 130 can be adjacent or run alongside each other to enable coupling over a distance or length of 100µm or more. For example the distance can be at least 100µm, or at least 200 µm, or at least 500 µm or at least 1mm or at least 5mm. In addition, while the distal portion of the second waveguide 140 and proximal portion of the first waveguide 130 are adjacent to each other, they are separated from each other by the silicon dioxide cladding 110. In some examples, this separation may be between 100nm and 400nm. This length of overlap and separation ensures an effective coupling of single photons or squeezed light between the waveguides.

In order to increase the effectiveness of the directional coupler formed between the distal portion of the second waveguide 140 and the proximal portion of the first waveguide 130, one or both of the distal portion of the second waveguide 140 and the proximal portion of the first waveguide 130 may be tapered. Where such tapering occurs, then the proximal portion of the first waveguide 130 can be tapered from a full depth or maximal depth of the first waveguide 130 to a minimal depth of the first waveguide 130 over a length of the proximal portion from a distal end of the proximal portion to a proximal end of the proximal portion. Thus, the proximal portion of the first waveguide 130 can have a minimal depth at a start of the overlap with the distal portion of the second waveguide 140 and a maximal depth at an end of the overlap with the second waveguide 140. In addition or as an alternative the distal portion of the second waveguide 140 can be tapered from a full depth or maximal depth over a length of the distal portion from the proximal end of the distal portion to a distal end of the distal portion. Thus, the distal portion of the second waveguide 140 can have a maximal depth at a start of the overlap with the proximal portion and a minimal depth at the end of the overlap with the proximal portion. In some examples, the angle of taper can be between 0.1° and 1°. The angle of taper can be an angle between the length and depth of the waveguide under consideration. Tapering one or both of the first waveguide 130 and the second waveguide 140 drives up evanescent field penetration into the silicon dioxide cladding and hence expands the beam profile leading to greater coupling efficiency.

As mentioned above, the second waveguide 140 comprises an input port 150. In some examples, the input port 150 receives light from a laser that is positioned off-chip e.g. a laser not formed in the silicon dioxide substrate 110. However, in other examples, the input port 150 may be coupled to a integrated on-chip laser e.g. a laser formed in the silicon dioxide substrate 110. This can enable improved coupling of light into the second waveguide 140.

Figure 2 shows a second example of a coupler 200 in accordance with this application. The features of the coupler 200 in Figure 2 are the same as the features of coupler 100 from Figure 1. In other words, the coupler 200 comprises a first silicon nitride waveguide 230 and a second silicon nitride waveguide 240 formed in a silicon dioxide substrate 210. The second silicon nitride waveguide 240 has input port 250. While in Figure 1 the second waveguide 140 is formed deeper than the first waveguide 130, in Figure 2 both waveguides are formed at the same depth in the silicon dioxide substrate 210. The tapering of the proximal portion of the first waveguide 230 and/or the tapering of the distal portion of the second waveguide 140 can enable the portions of the two waveguides to be formed next to each other while maintaining a desired gap between the two portions. As mentioned above, in some examples the desired gap may be between 100nm and 400nm and the adjacent portions may be adjacent for at least 100µm. The angle of taper may be between 0.1 ° and 1 °. In other examples, the gap may take a different value as may the angle of taper and length for which adjacent periods are adjacent. The forming the two waveguides next to each other leads to an advantage that additional components can be placed above either waveguide on a surface of the silicon dioxide substrate and still be suitably proximate to induce the required effect in the waveguide. This removes the need for forming trenches so can simplify the manufacturing process.

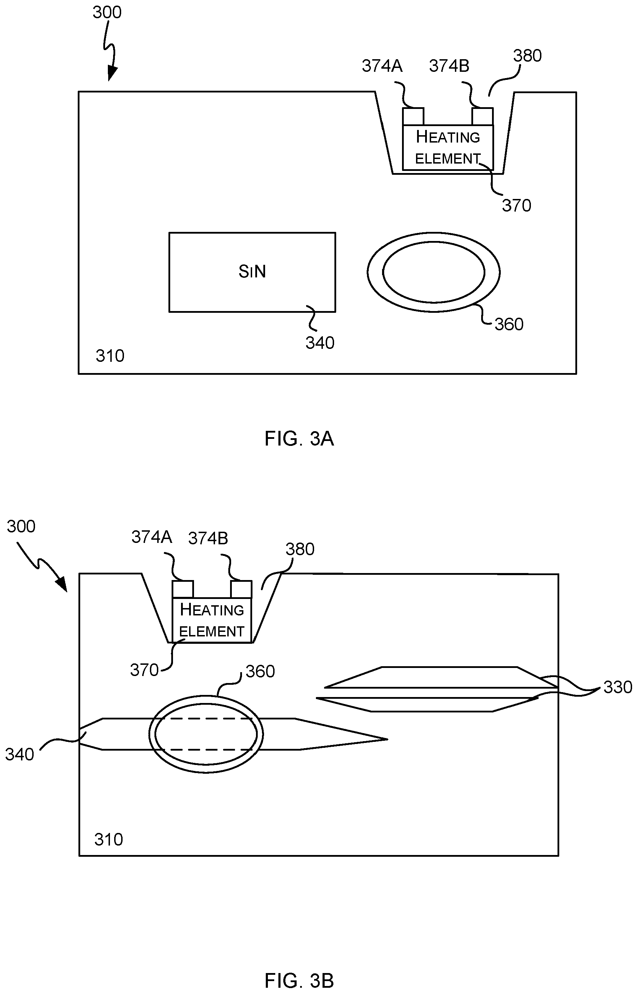

As mentioned above, it is desirable to incorporate additional components into the coupler in order to increase the functionality of the coupler. Figures 3A and 3B shows an example where a ring resonator 360 is incorporated into the coupler 300 adjacent to the second waveguide 340. Figure 3A shows a front cross-section showing the second waveguide 340 and the ring resonator 360. Figure 3B shows a side cross-section showing the second waveguide 340, the first waveguide 330 and the ring resonator 360. The first waveguide 330, the second waveguide 340 and the ring resonator 360 are formed in a silicon dioxide substrate 310. As can be seen in Figures 3A and 3B the ring resonator 360 is positioned at a similar depth to the second waveguide 340 and to one side of the second waveguide 340. While the ring resonator 360 is shown in Figure 3A as being to the right of the second waveguide 340, this is purely exemplary and the ring resonator 360 could also be to the left of the second waveguide 340. The ring resonator 360 is positioned proximate the second waveguide 340. In this regard, the gap between the second waveguide 340 and the ring resonator 360 may be at least 200nm and less than 1 µm. In some examples, the gap between the second waveguide 340 and the ring resonator 360 may be between 500 or 600 nm. The ring resonator 360 can be used for single photon generation and to generate squeezed light. In use, light couples from the second waveguide 340 into the ring resonator 360 since the proximity of the second waveguide 340 and ring resonator 360 means the evanescent field of light in the second waveguide 340 extends outside of the second waveguide 340 and into the ring of the ring resonator 360. This results in the ring resonator 360 being pumped by the light being injected into the ring resonator 360 e.g. the light coupling from the second waveguide 340 into the ring resonator 360. As would be known to the skilled person, interference effects in the ring resonator 360 can then cause a pair of single photons to be generated based on a frequency of light being injected into the ring resonator 360 from the second waveguide 340. Alternatively, in some examples, interference effects in the ring resonator 360 can cause squeezing of the light being pumped into the ring resonator 360. In order to tune the ring resonator 360 and its interference, a heating element 370 is provided when a ring resonator 360 is used. This heating element 370 is formed on rather than in the silicon dioxide substrate 310 and above the ring resonator 360.

As discussed above, in some examples (not shown in Figures 3A and 3B) the first waveguide 330 and the second waveguide 340 are at a same depth in the silicon dioxide substrate 310. In order to provide adequate heating to tune interference effects in the ring resonator 360, the heating element 370 may be placed within 1 µm, 1.5µm or 2µm of the second waveguide 340. In some examples a top of the second waveguide 340 is separated from the bottom of the heating element 370 by between 1.4µm to 2µm of the silicon dioxide substrate. In other examples a top of the second waveguide 340 is separated from the bottom of the heating element 370 by 1.7µm of silicon dioxide substrate, there may be a tolerance of ±3µm. When the first waveguide 330 and the second waveguide 340 are at a same depth in the silicon dioxide substrate 310, then the heating element 370 can be formed on a surface of the silicon dioxide substrate 310. However, as mentioned above, in other examples, the second waveguide 340 may be formed lower in the silicon dioxide substrate 310 than the first waveguide 330. In this example, if the heating element 370 is formed on a surface of the silicon dioxide substrate 310 then a distance between the heating element 370 and the ring resonator 360 may be too great to allow the heating element 370 to impact the interference of the ring resonator 360. In order to overcome this, a trench 380 may be formed in silicon dioxide substrate 310 above the ring resonator 360. The trench 380 can be formed by removing or trenching a section of the silicon dioxide substrate at a desired potion of the trench 380 to form the trench 380. A surface of the trench 380 can then be cleaned and a heating element positioned in the trench 380. This allows the heating element 370 to be positioned suitable close to the ring resonator 360 to adjust interference effects in the ring resonator 360. In some examples, the trench 380 may extend above a portion of the second waveguide 340 as well as the heating element 380. This portion of the second waveguide 340 is a portion of the second waveguide 340 that is not adjacent to/alongside the first waveguide 330. In other words, this portion of the second waveguide 340 is a different portion of the second waveguide 340 to the distal portion of the second waveguide 340 that runs alongside the proximal portion of the first waveguide 330.

The heating element 370 can comprise any suitable heating element 370. In one example, the heating element 370 comprises a layer of material 372 that gets hot via electrical resistance. In this example, a first electrical contact 374a second electrical 374b are used to provide an electrical current to the layer of material 372 in order to drive the heating element 370 and cause the heating element 370 to get hot. In some examples, the electrical contacts 374a and 374b can comprise or consist of gold. However, in other examples, the electrical contacts 374a and 374b can comprise or consist of tungsten. Both gold and tungsten are insert materials and so reduce potential interactions with surrounding components. Tungsten electrical contacts can be useful when the heating element 370 is placed in a trench 380 as tungsten has a higher melting point (>3000°C) than gold (-1000°C). In some examples, as part of the formation process of the coupler 300, annealing may be performed on the coupler 300 after the heating element has been formed in the trench 380. This annealing process can require heating all components in the coupler 300 to a temperature above the melting point of gold. In this example, the use of tungsten electrical contacts allows the heating element 370 to be formed in the trench 380 before the annealing process. While the above example has described two electrical contacts, the skilled person would understand more electrical contacts could be used as required. In addition, the skilled person would understand that in some examples tungsten electrical contacts are useful even when a trench is not used due to the high melting point of tungsten and the potential for the coupler to require an annealing process.

Although Figures 3A and 3B show a single ring resonator 360, in some examples multiple ring resonators may be used since a ring resonator 360 only probabilistically generates photons or squeezed light. The use of multiple ring resonators can increase the probability of a pair of single photons being generated in the second waveguide and thus increase the probability that a single photon can be coupled into the first waveguide. Alternatively, a first ring resonator may be used to generate photons while subsequent ring resonators may be used for filtering. In other examples, photons may be generated in other ways and a pair of ring resonators used as a filter.

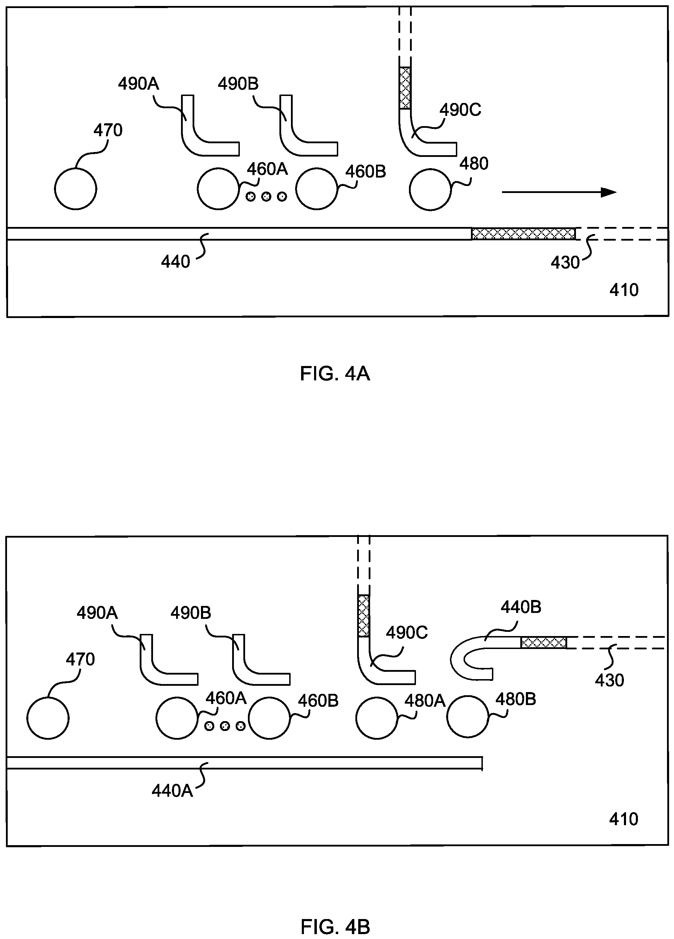

Figure 4A shows an example arrangement of ring resonators being used with a second waveguide 440 in a silicon dioxide substrate 410. As in the examples above, the second waveguide 440 is a silicon nitride waveguide and can comprise a "thick" silicon nitride waveguide. Figure 4A shows a vertical or top cross section and shows second waveguide 440 and first waveguide 430. Light from the second waveguide 440 is configured to couple into the first waveguide 430 as described above. In addition, while the second waveguide 440 and first waveguide 430 are shown overlapping in the crosshatched area, the second waveguide 440 and first waveguide 430 are separated from each other vertically.

In Figure 4A a first, optional single photon source ring resonator 470 is shown. This photon source ring resonator takes as an input laser light travelling in the second waveguide 440 and outputs a pair of single photons. As the single photon source ring resonator 470 is not a filter, the output will also include some remnants of the originally input laser light. In addition, the output of the single photon source ring resonator 470 includes both photons of the pair of photons generated by the single photon source ring resonator 470. The pair of single photons can be known as the idler photon and signal photon, wherein the signal photon is the photon that will be used for later information processing in the first waveguide 430. Such single photon source ring resonators 470 are known and could be implemented by the skilled person. The single photon source ring resonator 470 is described as optional. This is because while it is used in some examples, in other examples an alternative source of single photons (or pairs of single photons) is used. Where present, the single photon source ring resonator 470 is positioned towards the proximal end of the second waveguide 440 in order to generate pairs of single photons from laser light input into the second waveguide 440 as a first stage in the process of providing a second silicon nitride waveguide 430 with single photons. While Figure 4A shows a single photon source ring resonator 470, a squeezed light source ring resonator could also be present at position 470 if the coupler is being used with squeezed light rather than single photons.

The example shown in Figure 4A also shows two filter ring resonators 460A and 460B. While in Figure 4A shows two filter ring resonators 460A and 460B, more filter ring resonators could be present. In some examples, up to five filter ring resonators may be present. As the number of ring resonators increases so does a space taken to position the ring resonators. In addition, the risk of fabrication errors and photon loss increases with an increased number of ring resonators. The use of up to five ring resonators provides a good trade off between these factors and an amount of laser light filtered. However, in other examples up to eight ring resonators could be used. Where a single photon source ring resonator 470 or a squeezed light ring resonator is present, then the filter ring resonators 460A and 460B are displaced from the single photon source ring resonator 470 or squeezed light ring resonator to ensure no coupling between the single photon source ring resonator or squeezed light ring resonator and the filter ring resonators 460A and 460B. To this end, the filter ring resonators 460A and 460B are separated from the single photon source ring resonator or the squeezed light ring resonator by at least 2µm or at least 3µm. The filter ring resonators 460A and 460B are positioned distally from the single photon source ring resonator 470 or the squeezed light ring resonator in that the filter ring resonators are positioned after the single photon source ring resonator 470 or squeezed light ring resonator in the direction of propagation of light through the second waveguide 440. Each of the filter ring resonators may be separated from its nearest neighbor filter ring resonators by at least 200nm and less than 1µm. In some examples each filter ring resonators is separated from its nearest neighbor filter ring resonators by between 450nm and 650nm. This means that the multiple filter ring resonators 460A and 460B couple. Each filter ring resonator 460A and 460B has a corresponding drop-port waveguide, 490A and 490B, respectively. These drop-port waveguides either terminate or transport any light/photons in the drop-port waveguides to a high-loss geometry where all the energy in the light bleeds into the far field. In use, light from the second waveguide 440 is coupled into the filter ring resonators 460A and 460B and the laser light still present in the second waveguide 440 is coupled into the drop-port waveguides 490A and 490B while the single photon pair or squeezed light is coupled back into the second waveguide 440. This enables the two ring resonators to act as a filtering mechanism for separating single photons or squeezed light from the initial input laser light. This enables the single photon pair or squeezed light to be separated from any remnants of laser light present after generation.

Each filter ring resonator 460A and 460B of the multiple filter ring resonators have a same circumference within manufacturing tolerances. However, in use, each filter ring resonator 460A and 460B of the multiple ring resonators is tuned via a respective heating element (not shown) to a different resonant frequency. By selecting the resonant frequencies for each filter ring resonator 460A and 460B, an overlapping resonance is used to create a narrow or tight transmission peak which separates the single photon pair or squeezed light from the input laser light even though the single photon pair or squeezed light has a similar frequency to the input laser light. In some examples, the narrow or tight transmission peak is in the range between about 193 - 193.7 THz or less than 5nm in terms of wavelength. The "selected" frequencies of light are coupled back into the second waveguide 440 while the remnant light is coupled into a drop-port waveguide 490A or 490B corresponding to the filter ring resonator 460A or 460B. The selection of resonant frequencies and tuning of the filter ring resonators 460A and 460B would be within the knowledge of the skilled person. This enables the multiple filter ring resonators 460A and 460B and their overlapping resonances to be used to filter the single photon pair or squeezed light from the input or remnant laser light.

Figure 4A also shows a couple out ring resonator 480. The couple out ring resonator 480 can also be known as a separator ring resonator 480. The couple out ring resonator 480 is positioned distal to the filter ring resonators 460A and 460B in that it is downstream in the direction of propagation of light from the filter ring resonators 460A and 460B. The couple out ring resonator 480 is positioned outside a coupling distance of the filter ring resonators 460A and 460B and can be a suitable distance from the filter ring resonators 460A and 460B to ensure the heating elements for the filter ring resonators 406A and 460B do not impact the couple out ring resonator 480 and vice versa. In some examples this involves the couple out ring resonator 480 being at least 2 µm or at least 3 µm from the filter ring resonators 460A and 460B. In the example shown in Figure 4A, the couple out ring resonator 480 is configured to separate the photon pair that remains in the second waveguide 440 after the filter ring resonators 460A and 460B. To this end, an idler photon of the photon pair couples into the couple out ring resonator 480 from the second waveguide 440. The couple out ring resonator 480 is then tuned, using a corresponding heating element, to separate the single photon pair such that the idler photon enters a drop-port waveguide 490C corresponding to the couple out ring resonator 480. The signal photon remains in the second waveguide 440. Tuning a couple out ring resonator 480 in this way would be within the knowledge of the skilled person. Distal to the couple out ring resonator, the second waveguide 440 can couple to a first waveguide 410 as described above. In some examples the drop-port waveguide 490C corresponding to the couple out ring resonator 480 can also couple to another waveguide to enable the idler photon to undergo further processing, such as measurement to confirm the existence of the signal photon. When squeezed light is used instead of single photons then the couple out ring resonators 480 is tuned to allow the squeezed states to be routed in the second waveguide 440 and then on to any other optical circuits, for example first waveguide 430. While Figure 4A shows a couple out ring resonator 480, the skilled person would understand that in some examples the couple out ring resonator 480 is not present and the filer ring resonators 460A and 460B fulfill both the filtering and couple out function.

In the example shown in Figure 4A all the ring resonators (e.g. single photon source ring resonator 470, filter ring resonators 460A and 460B and couple out ring resonator 480) are shown to the left of the second waveguide 440 and first waveguide 430 in the direction of propagation of light, the skilled person would understand that this is purely exemplary and the ring resonators could alternative be positioned to the right of the second waveguide 440 and first waveguide 430. In addition, in the example shown in Figure 4A, light couples into and out off the ring resonators on the same side of the ring resonators. This can simplify forming the coupler and provide improved routing further down the line. However, in other examples it can be beneficial to have light couple out of the opposite side of one of the ring resonator and into a separate or discrete portion of the second waveguide 440 for at least one of the ring resonators. This ensures that any light from the first portion of the second waveguide 440 which does not couple into the ring resonator is "lost" and thus further filters out the original input laser light.

Figure 4B shows an example arrangement where light couples into and out of opposite sides of a ring resonator. The features shown in Figure 4B are the same as those shown in Figure 4A with like reference numerals referencing the same feature. However, in Figure 4B the second waveguide 440 comprises a first part 440A and a second part 440B. The couple out ring resonator 480 discussed above then comprises a first couple out ring resonator 480A. A second couple out ring resonator 480B is also present. As the second couple out ring resonator 480B is downstream from the first couple out ring resonator 480A, first part of the second waveguide 440A contains the signal photon or required states of squeezed light where the first part of the second waveguide 440A is adjacent to the second couple ring resonator 480B but the idler photon or other states of squeezed light have been coupled out via couple out ring resonator 480A. The light (that comprises the signal photon or squeezed light and any noise or remnants of laser light) couples into the second couple out ring resonator 480B from the first part 440A of the second waveguide 440 and couples out of the second couple out ring resonator 480B into the second part 440B of the second waveguide 440 wherein the light couples into and out of the second couple out ring resonator 480B on opposite sides of the second couple out ring resonator 480B. This provides additional filtering of the light and ensures no laser light accompanies the signal photon. In addition, in some circumstances this can enable fewer or even no filter ring resonators 460A, 460B to be used.

As described above, a heating element may be positioned above the ring resonators to enable control of the ring resonators. When more than one ring resonator is present, then a heating element may be positioned above each ring resonator either on a surface of the silicon dioxide substrate or within a trench formed in the silicon dioxide substrate. In some examples, a single trench may be present positioned above multiple ring resonators and multiple heating elements may be present in the trench. In other examples, a separate trench may be present over each ring resonator and each trench may contain a heating element for that ring resonator. In yet another example, a single trench may be present for ring resonators that are positioned proximate each other and separate trenches for more distant ring resonators. Again, a heating element can be present and positioned above each ring resonator. In some examples a separate heating element is used for each ring resonator, this accounts for fabrication defects and drift which occurs in each ring resonator independently. Alternatively a single heating element may be used to control all ring resonators.

While Figures 4A and 4B show example arrangements of multiple ring resonators, the skilled person would understand that other arrangements of multiple ring resonators with respect to a second waveguide are possible.

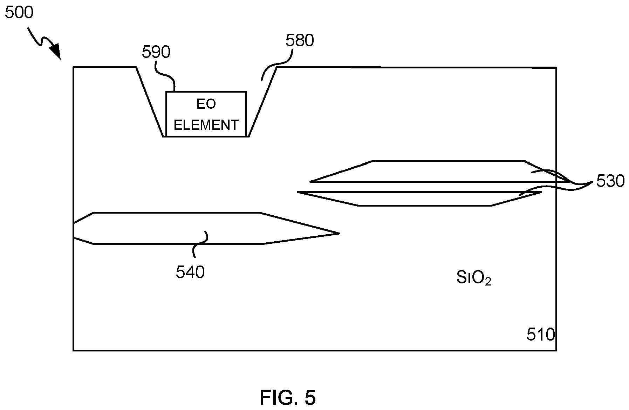

Figure 5 shows another example where an electro-optically active material is positioned above the second waveguide. As with the previous Figures, Figure 5 shows a coupler 500 comprising a first waveguide 530 that may comprise a TriPlex waveguide and a second waveguide 540 formed in a silicon dioxide cladding or substrate 510. The second waveguide 540 comprises a silicon nitride "thick" waveguide that can be used as a platform for a *χ*⁽³⁾ optical Kerr non-linearity that can be used for single photon or squeezed light generation, potentially via a ring resonator as discussed above. In Figure 5 an electro-optically active material 590, such as Barium Titanate and Rubidium Titanyl Phosphate, is present/formed above a proximal portion of the second waveguide 540. The strip of electro-optically active material 590 can have a thickness of between 170nm and 1500nm. In the example shown in Figure 5, the second waveguide 540 is positioned deeper in the silicon dioxide substrate 510. Thus, the electro-optically active material 590 is formed in a trench 580 wherein the trench 580 is formed above the proximal portion of the second waveguide 540. In examples where one or more ring resonators (not shown) are present then the trench 580 can be the same trench used to contain a heating element for the ring resonator and the trench 580 may contain both an electro-optically active material and a heating element. In other examples, a separate trench may be formed for the electro-optically active material 590 and the heating element. In yet other examples, a ring resonator may not be present. While in the example shown in Figure 5 a trench 580 is present to contain the electro-optically active material 590, in other examples the second waveguide 540 may be positioned at a same depth in the silicon nitride substrate 510 as the first waveguide 530. In these examples, the electro-optically active material 590 may be sufficiently close to the second waveguide 540 to induce birefringence in the second waveguide 540 without the use of a trench. Thus, the electro-optically active material 590 can be placed on a surface of the silicon dioxide substrate 510 rather than being formed in a trench. The electro-optically active material can be used to generate high frequency phase modulation which in turn can be used for multiplexing, cluster state generation and quantum information processing applications.

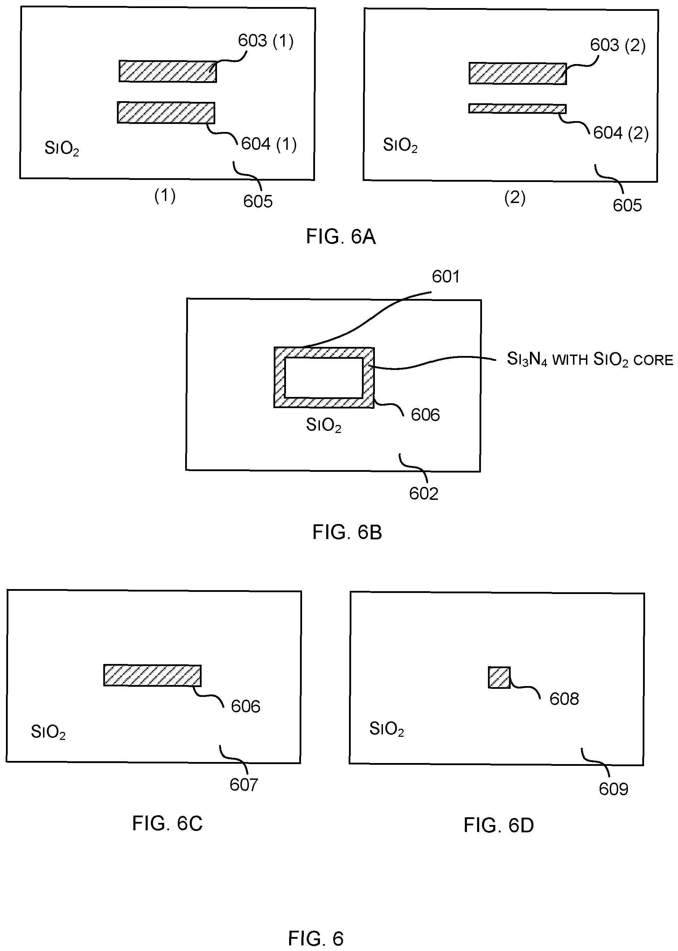

In the present application, a second "thick" silicon nitride waveguide is being used to provide single photons or squeezed light to a first silicon nitride waveguide that can comprise a TriPlex waveguide. In some examples, the first waveguide can comprise a double-stripe TriPlex waveguide as shown in Figure 6A. Each double stripe-layout Triplex comprises two strips of silicon nitride in a silicon dioxide layer/shell/cladding 605 wherein each strip takes the form of a stripe. In Figure 6(1) the two strips of silicon nitride 603(1), 604(1) are symmetric and have the same width and thickness. The two strips of silicon nitride 603(1), 604(1) are the same length, aligned with one another and spatially separated from one another by the silicon dioxide layer/cladding 605. In an example of a low index contrast version both strips of silicon nitride 603(1), 604(1) can have a thickness of 35nm, the width of the waveguide can be 1µm and the separation between the two strips of silicon nitride 603(1), 604(1) can be 500nm. In an example of a high index contrast version, the strips of silicon nitride 603(1), 604(1) can have a thickness of up to 170nm, the waveguide width can be 1µm and the separation between the two strips of silicon nitride 603(1), 604(1) can be 500nm. In Figure 6(2) the two strips of silicon nitride 603(2), 604(2) are asymmetric with a first silicon nitride strip 603(2) having the same width but a different thickness to the second silicon nitride strip 604(2). The two strips of silicon nitride 603(2), 604(2) are the same length, aligned with one another and spatially separated from one another by the silicon dioxide layer/cladding 605. In an example of a low index contrast version, the top strip of silicon nitride 603(2) has a thickness as low as 0nm, while the bottom strip of silicon nitride 604(2) has a thickness of 75nm, the waveguide has a width of 1.2µm and the separation between the top and bottom strip of silicon nitride 603(2), 604(2) is 500nm. In an example of a high index contrast version, the top strip of silicon nitride 6103(2) has a thickness of 175nm and the bottom strip of silicon nitride 604(2) has a thickness of 70nm, the waveguide has a width of 0.8µm and the separation between the two strips of silicon nitride 603(2) 604(2) is 100nm.

In other examples, the second silicon nitride waveguide can comprise other forms of TriPlex waveguides. For example, as shown in Figure 6B, the second silicon nitride waveguide can be a box shell layout of TriPlex, this layout comprises a strip of silicon nitride in the form of a box 601, the box-shaped strip of silicon nitride is hollow and has a core of silicon dioxide. The strip of silicon nitride is in a silicon dioxide cladding 602. In an example of a low index contrast version, the box 601 of silicon nitride can have a 1x1 µm² core of silicon dioxide while the box of silicon nitride 601 can be 50nm thick. In an example of a high index contrast version, the box 601 can have a 0.5x0.5 µm² core while the silicon nitride box 601 can be 170nm thick.

In a further example shown in Figure 6C, the second silicon nitride waveguide can comprise a single-stripe layout of TriPlex. This layout comprises a strip 606 of silicon nitride in a silicon dioxide layer/shell/cladding 607 wherein the strip 606 takes the form of a stripe. The stripe 606 can have a thickness between 20 to 100µm and the waveguide can have a width between 0.3 and 14µm. In another example shown in Figure 6D, the second silicon nitride waveguide can comprise a filled box layout of TriPlex. This layout comprises a strip of silicon nitride 608 in a silicon dioxide layer/shell/cladding 609 wherein the strip 608 of silicon nitride takes the form of a filled box. The silicon nitride box 608 can have a thickness between 0.8 and 1.2µm and the waveguide can have a width between 0.8 and 1µm.

The first silicon nitride waveguide which can comprise a TriPlex waveguide such as a double-stripe TriPlex waveguide that is then used for other applications such as quantum computing. Therefore, in some examples (not shown) electro-optically active materials and/or heating elements may be positioned above the first silicon nitride waveguide to enable the generation of birefringence and other optical effects to enable the implementation of further operations in the first silicon nitride waveguide. In other examples, an electro-optically active material may be deposited before the TriPlex so may be formed below the first silicon nitride waveguide. In some examples a single photon detector may be present at the end of the first waveguide. In some examples, the single photon detector may comprise superconducting nanowire single photon detector (SNSPD). In these examples, the SNSPD may be formed on a separate silicon dioxide substrate. This is because the SNSPD requires cryogenic cooling while the coupler and optical circuit formed from the first waveguide can operate at room temperature. Thus, forming the SNSPD separately enables just the SNSPD to be cooled cryogenically.

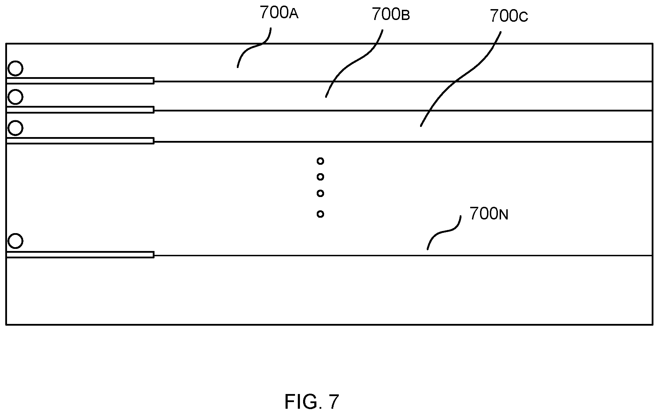

The present invention has focused on a coupler for coupling single photons or squeezed light into a first waveguide that can comprise a TriPlex waveguide. As discussed above, the single photons or squeezed light can be generated using ring resonators. However, the probability of a ring resonator successfully generating a photon pair can be around 1% to 2% but can be up to 8%. Therefore, in some examples it is desirable to have multiple couplers. This is shown in Figure 7 where couplers 700a - 700n are shown. Here the number of couplers can be any integer number greater than 1 and less than 80. The arrangement of ring resonators or other components in the couplers may be the same for each coupler or may differ between couplers. In some examples a measurement process is used to establish which coupler has successfully generated a single photon pair. In the measurement process, when a pair of single photons are generated by a ring resonator they are entangled as a result of the generation process. The two single photons from the pair are separated and the lower frequency photon is routed to a detector. The detection of this photon implies the existence of the other photon of the pair which can then be used as a input single photon. A switching structure connected to the couplers can then be used to switch the output of that coupler into a further optical circuit for input into a quantum computer or optical switch etc. This enables the optical couplers above to be used even when the ring resonators generate single photons with a low efficiency.

In an example this application relates to an optical coupler for coupling single photons or squeezed light into a first silicon nitride waveguide which can comprise a TriPlex waveguide such as a double-stripe TriPlex waveguide. As TriPlex has a low *χ*⁽³⁾ optical Kerr non-linearity, it can be challenging to form single photons or squeezed light in such a waveguide. To overcome this, a second silicon nitride waveguide, which can be considered a "thick" silicon nitride waveguide, which can be used as a platform for a *χ*⁽³⁾ optical Kerr non-linearity, is formed wherein a distal end of the second silicon nitride waveguide runs alongside or is adjacent to a proximal end of the first silicon nitride waveguide enabling light to couple from the second silicon nitride waveguide to the first silicon nitride waveguide. Despite being a platform for a higher *χ*⁽³⁾ optical Kerr non-linearity, the second silicon nitride waveguide can have a higher loss than the first silicon nitride waveguide. Single photons or squeezed light are formed in the second silicon nitride waveguide, for example via a ring resonator and then coupled into the first silicon nitride waveguide. This enables the higher *χ*⁽³⁾ optical Kerr non-linearity of the second silicon waveguide to be used for photon or squeezed light generation and the low loss of the first silicon nitride waveguide to be used for downstream applications.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A coupler for coupling single photons or squeezed light into a first silicon nitride waveguide of an optical circuit, the coupler comprising:
a silicon dioxide substrate;
the first silicon nitride waveguide formed in the silicon dioxide substrate, wherein the first silicon nitride waveguide is formed in a distal end of the silicon dioxide substate, and
a second silicon nitride waveguide formed in the silicon dioxide substate, wherein:
the second silicon nitride waveguide is formed in a proximal end of the silicon dioxide substrate;
a distal portion of the second silicon nitride waveguide is adjacent to a proximal portion of the first silicon nitride waveguide to cause light to couple from the second silicon nitride waveguide into the first silicon nitride waveguide; and
the second silicon nitride waveguide has a thickness greater than a thickness of the first silicon nitride waveguide; and
a light input port configured to couple light from a laser light source into a proximal end of the second silicon nitride waveguide.

2. The coupler of claim 1, wherein the second silicon nitride waveguide has a width greater than a width of the first silicon nitride waveguide,

3. The coupler of claim 1 or claim 2, wherein:
the second silicon nitride waveguide is formed lower in the silicon dioxide substrate than the first silicon nitride waveguide; and
the distal portion of the second silicon nitride waveguide adjacent to the proximal portion of the first silicon nitride waveguide is beneath the proximal portion of the first silicon nitride waveguide.

4. The coupler of claim 3, further comprising:
a trench in the silicon dioxide substrate wherein the trench is above a proximal portion of second silicon nitride waveguide, wherein the proximal portion of the second silicon nitride waveguide is not adjacent to the first silicon nitride waveguide; and
an electro-optically active material in the trench.

5. The coupler of claim 4, further comprising:
one or more ring resonator formed in the silicon dioxide substrate adjacent to the proximal portion of the second silicon nitride waveguide;
a trench in the silicon dioxide substrate, wherein the trench is above the one or more ring resonators; and
one or more heating elements in the trench, wherein each heating element modulates an interferometer within one of the one or more ring resonators.

6. The coupler of claim 5, wherein:
the one or more ring resonators comprise a first ring resonator and a second ring resonator;
the one or more heating elements comprise a first heating element and a second heating element;
the first heating element is positioned in the trench above the first ring resonator; and
the second heating element is positioned in the trench above the second ring resonator.

7. The coupler of claim 1 or claim 2, wherein:
the first silicon nitride waveguide and the second silicon nitride waveguide are formed at a same depth in the silicon dioxide substrate;
the distal portion of the second silicon nitride waveguide comprises a distal edge of the second silicon nitride waveguide; and
the proximal portion of the first silicon nitride waveguide comprises a proximal edge of the first silicon nitride waveguide.

8. The coupler of claim 7, further comprising:
an electro-optically active material formed on a surface of the silicon dioxide substrate above a proximal portion of the second silicon nitride waveguide, wherein the proximal portion of the second silicon nitride waveguide is not adjacent to the first silicon nitride waveguide.

9. The coupler of claim 7 or claim 8, further comprising:
one or more ring resonators formed in the silicon dioxide substrate adjacent to a proximal portion of the second silicon nitride waveguide, wherein the proximal portion of the second silicon nitride waveguide is not adjacent to the first silicon nitride waveguide; and
one or more heating element formed on a surface of the silicon dioxide substrate above the ring resonator, wherein each heating element modulates an interferometer within a corresponding respective ring resonator.

10. The coupler of any of claims 6, or 9, further comprising:
a filtering ring formed in the silicon dioxide substrate adjacent to the proximal portion of the second silicon waveguide.

11. The coupler of claim 6, 9, or 10, wherein the heating element comprises tungsten electrical contacts.

12. The coupler of any previous claim, wherein:
a thickness of the distal portion of the second silicon nitride waveguide adjacent to the first silicon nitride waveguide tapers from a maximum thickness to a minimum thickness from a proximal end of the distal portion to a distal end of the distal portion; and/or
a thickness of the proximal portion of the first silicon nitride waveguide adjacent to the second silicon nitride waveguide tapers from a minimum thickness to a maximum thickness from a proximal end of the proximal portion to a distal end of the distal portion.

13. The coupler of claim 12, wherein:
an angle of the taper of the distal portion of the second silicon nitride waveguide is between 0.1° and 1°; and/or
an angle of the taper of the proximal portion of the first silicon nitride waveguide is between 0.1° and 1°.

14. The coupler of any previous claim, wherein the second waveguide has a rectangular cross-section or the second waveguide has a trapezoid cross-section formed of canted lateral facets.

15. The coupler of any previous claim, wherein:
the first silicon nitride waveguide comprises a TriPlex waveguide.
